# FASCICULE DE BREVET EUROPEEN

(11) **EP 0 731 005 B1**
(45) Date de publication et mention de la délivrance du brevet: **19.01.2000**
(21) Numéro de dépôt: 96103460.0
(22) Date de dépôt: 05.03.1996
(51) Int. Cl.: B60R 25/02

(54) **Antivol de direction de véhicule automobile**
Lenkradschloss für ein Kraftfahrzeug
Vehicle steering lock

(30) Priorité: 10.03.1995 FR 9502894
(43) Date de publication de la demande: 11.09.1996
(73) Titulaire: VALEO SECURITE HABITACLE, 94000 Créteil (FR)
(72) Inventeur: Canard, Louis, 58000 Nevers (FR); Brunet, Philippe, 58000 Nevers (FR); Olive, Pascal, 58000 Nevers (FR)
(74) Mandataire: Kohn, Philippe

(56) Documents cités:
- EP-A- 0 195 209
- FR-A- 2 087 435
- FR-A- 2 518 943
- US-A- 3 313 132

## Description

La présente invention concerne un antivol de direction de véhicule automobile.

L'invention concerne plus particulièrement un antivol du type comportant un boîtier monté sur la colonne de direction du véhicule et qui reçoit un verrou qui commande un pêne qui fait saillie à travers une ouverture du boîtier pour coopérer avec un organe rotatif de la colonne de direction.

Selon une conception connue, le boîtier délimite un logement qui reçoit le corps du verrou et qui est ouvert à l'une de ses extrémités axiales pour permettre au conducteur d'introduire une clef dans le verrou à travers un trou formé dans un collet radial interne de retenue axiale du verrou dans le logement.

Selon les divers agencements connus d'une telle conception d'un boîtier d'antivol, l'extrémité ouverte du logement par laquelle le conducteur peut introduire sa clef est bien entendu parfaitement dégagée et accessible pour faciliter la manoeuvre de l'antivol.

Un tel agencement a pour inconvénient d'offrir une accessibilité à un voleur éventuel qui procède par effraction en extrayant le corps du verrou par cette extrémité ouverte du logement du verrou et qui peut ensuite agir directement sur le pêne de l'antivol pour débloquer la colonne de direction en rotation et éventuellement agir sur le contacteur électrique pour établir le contact.

Une telle effraction est généralement rendue possible car le collet radial interne de retenue axiale du corps du verrou est formé sur une pièce de fermeture du logement qui est mise en place après l'introduction du corps du verrou dans le logement et qui est donc une pièce susceptible d'être démontée lors de l'effraction ou d'être détruite aisément.

C'est notamment le cas lorsque le collet radial est formé sur une pièce rapportée à l'extrémité libre ouverte du logement ou est constituée par un bord, serti radialement vers l'intérieur, d'une pièce nécessairement déformable pour réaliser le sertissage et donc déformable pour permettre l'extraction du verrou par effraction.

Le document FR-A-2.518.943 propose une conception d'un antivol de direction du type mentionné précédemment qui permet de remédier partiellement à l'inconvénient qui vient d'être mentionné en limitant les possibilités d'effraction par démontage ou extraction du verrou hors de son logement.

Dans ce but, ce document propose un antivol de direction, dans lequel le collet radial interne de retenue est réalisé venu de matière avec une jupe annulaire du boîtier qui délimite le logement du verrou, dans lequel le verrou est mis en place dans le logement par une extrémité axiale ouverte de ce dernier opposée au collet de retenue en étant retenu axialement dans son logement par un bouchon de retenue qui obture ladite extrémité axiale ouverte du logement du verrou et dans lequel, en position montée du boîtier de l'antivol sur la colonne de direction, un composant de cette dernière empêche le retrait du bouchon de retenue.

Si l'on considère que la partie avant de l'antivol est celle tournée vers le conducteur, le verrou de l'antivol est monté initialement "par l'arrière" dans le boîtier de l'antivol par une extrémité ouverte de ce dernier qui peut être ensuite obturée et qui n'est pas apparente ni accessible aisément dans l'habitacle du véhicule, en limitant ainsi les risques d'effraction par extraction du corps du verrou lorsque le boîtier est monté sur la colonne de direction.

Afin de permettre ce montage le document propose de faire appel à une bride ou collier qui, après fixation, entoure la colonne de direction en complément d'un logement semi-cylindrique complémentaire du corps du boîtier.

Ainsi, il demeure un risque d'effraction très important dans la mesure où un voleur a la possibilité de démonter aisément le boîtier en désolidarisant le collier du boîtier.

Afin de remédier à cet inconvénient, l'invention propose un antivol du type de celui décrit et représenté dans le document FR-A-2.518.943, caractérisé en ce que le corps du bouchon de retenue est reçu axialement dans l'extrémité axiale ouverte du logement du verrou, en ce qu'il est prévu des moyens d'immobilisation axiale du bouchon de retenue dans l'extrémité ouverte du logement du verrou, en ce que le boîtier comporte un alésage qui reçoit un tube, de section complémentaire, de la colonne de direction pour le montage de l'antivol sur la colonne de direction, en ce que les axes de l'alésage et du logement du verrou ne sont pas parallèles, et en ce que le corps du bouchon se prolonge transversalement par une patte de blocage dont l'extrémité libre comporte une portion de surface cylindrique concave qui, en position montée du bouchon de retenue, complète la surface cylindrique interne concave de l'alésage de manière à empêcher le démontage du bouchon lorsque le tube de la colonne de direction est monté dans l'alésage.

Afin d'améliorer encore la sécurité conférée par la nouvelle conception de l'antivol, et selon d'autres caractéristiques de l'invention :
- les moyens d'immobilisation comportent une goupille ;
- la patte de blocage est reçue dans un évidement du corps du boîtier formé dans une partie de liaison du boîtier entre la jupe du logement du verrou et la partie tubulaire dans laquelle est formé l'alésage ;
- le pêne de l'antivol est monté coulissant dans le bouchon de retenue et il est susceptible de faire saillie à travers une ouverture formée dans ladite portion de surface cylindrique concave de la patte de blocage ;
- la face transversale du bouchon de retenue tournée vers l'intérieur du logement comporte une lumière de guidage en coulissement d'un organe de commande du déplacement du pêne qui coopère avec un organe de sortie du verrou ;
- la face transversale du bouchon de retenue tournée vers l'extérieur du logement du verrou délimite un réceptacle pour un contacteur électrique de mise en marche du moteur du véhicule, et le corps du bouchon comporte un trou central débouchant pour le passage d'un organe de sortie du verrou susceptible de coopérer avec le contacteur ;
- le tube de la colonne de direction comporte une fente d'indexation en position angulaire et axiale du boîtier sur le tube qui reçoit un cran d'indexation de profil complémentaire formé en saillie sur la paroi concave de l'alésage ;
- le cran d'indexation est formé au moins en partie sur la portion de surface cylindrique convexe de la patte de blocage ;
- le pêne est susceptible de faire saillie à l'intérieur du tube de la colonne de direction à travers la fente d'indexation ;
- le boîtier de l'antivol est moulé en une seule pièce.

D'autres caractéristiques et avantages de l'invention apparaîtront à la lecture de la description détaillée qui va suivre pour la compréhension de laquelle on se reportera aux dessins annexés dans lesquels :
- La figure 1 est une vue en perspective éclatée qui illustre les principaux composants d'un antivol de direction de véhicule automobile réalisé conformément aux enseignements de l'invention, la vue représentant le boîtier de l'antivol par l'arrière ;
- la figure 2 est une vue en perspective qui illustre l'antivol de direction de la figure 1 partiellement assemblé ainsi que le bouchon de retenue du verrou qui est illustré en position éclatée hors du boîtier ;
- la figure 3 est une vue schématique en perspective qui illustre une portion du tube de la colonne de direction qui est conçu pour permettre le montage sur la colonne de direction de l'antivol conforme aux enseignements de l'invention ;
- la figure 4 est une vue en coupe, selon la ligne 4-4 de la figure 2, du boîtier de l'antivol ;
- la figure 5 est une vue en bout de l'arrière du boîtier de l'antivol selon l'axe de l'alésage pour le tube de la colonne de direction ;
- la figure 6 est une vue en bout, selon le même angle que sur la figure 5, qui illustre le bouchon de retenue du verrou ;
- la figure 7 est une vue similaire à celle de la figure 5 sur laquelle le bouchon de retenue de la figure 6 est illustré en position montée dans le boîtier ; et
- la figure 8 est une vue similaire à celle de la figure 7 sur laquelle le bouchon de retenue est illustré en position partiellement extrait hors du logement du verrou pour illustrer l'impossibilité de son démontage lorsque le boîtier est monté sur la colonne de direction.

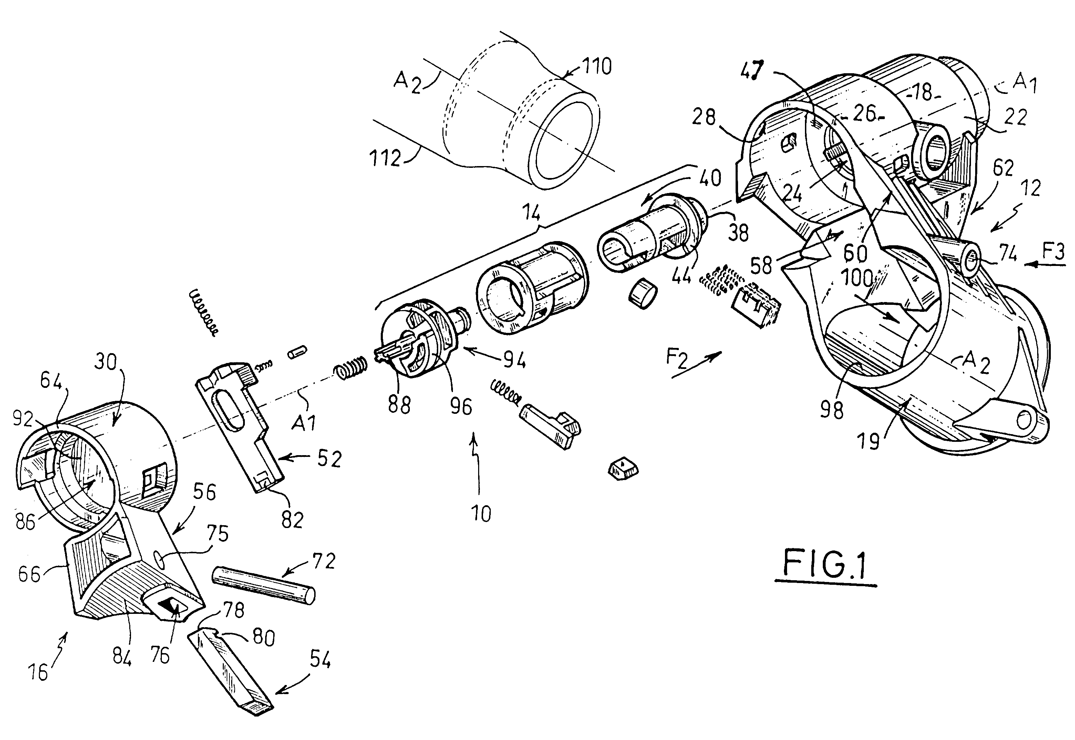

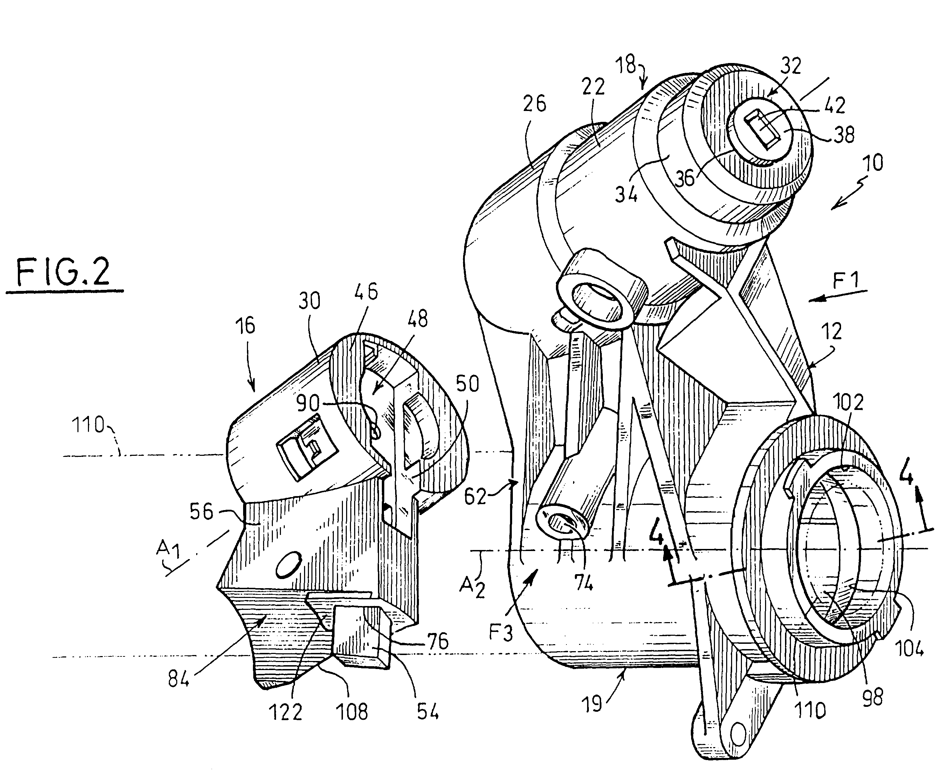

L'antivol 10 illustré aux figures 1 et 2 est constitué pour l'essentiel par un boîtier d'antivol 12 par un verrou 14 et par un bouchon de retenue 16.

Le boîtier d'antivol 12 est une pièce réalisée par moulage en alliage léger ou en matière plastique armée, qui est constituée pour l'essentiel par deux parties 18, 19, de forme générale cylindrique tubulaire, reliées entre elles par une partie de liaison.

Le boîtier 12 comporte ainsi une première partie 18 de forme générale cylindrique tubulaire qui est constituée pour l'essentiel par une jupe annulaire cylindrique 22 qui détermine un logement tubulaire creux 24 qui est prévu pour recevoir les composants du verrou 14.

La première partie 18 comporte également, dans le prolongement de la jupe annulaire 22, une jupe annulaire cylindrique 26 qui détermine un logement 28 de plus grand diamètre que le logement 24 qui est prévu pour recevoir une partie cylindrique de diamètre complémentaire 30 du corps du bouchon de retenue 16.

La première partie 18 du boîtier 12 comporte ainsi une extrémité ouverte 28 et présente, à son extrémité axiale opposée, un collet radial 32 qui s'étend radialement vers l'intérieur à partir d'une portion 34 de diamètre réduit de la jupe annulaire 22 pour délimiter une ouverture circulaire 36 à travers laquelle fait partiellement saillie une extrémité 38 du barillet 40 du verrou 14 qui comporte une fente 42 pour l'introduction par le conducteur d'une clef du verrou pour la commande de l'antivol.

Lorsque le verrou 14 est en place dans le logement 24, il prend appui dans le fond de ce dernier délimité par la face interne du collet 32 par l'intermédiaire du collet radial extérieur 44 du barillet 40.

Conformément à une première caractéristique de l'invention, et comme on peut le voir notamment sur la figure 2, le collet radial intérieur 32 de retenue du verrou 14 dans le logement 24 est réalisé venu de matière par moulage avec le corps du boîtier 12 de l'antivol 10.

Si l'on considère l'antivol 10 par l'avant, c'est-à-dire selon la direction de la flèche F1 de la figure 2, on comprend aisément qu'il est impossible de procéder à l'extraction du verrou hors du logement 24 depuis la face avant d'extrémité constituée par le collet radial 32 et qu'il est donc ainsi impossible à un voleur de procéder à l'effraction de l'antivol 10 par extraction axiale du verrou 14.

La conception selon l'invention est telle que l'ensemble des composants du verrou 14 sont introduits par l'arrière du boîtier 12, c'est-à-dire selon la direction indiquée par la flèche F2 de la figure 1.

La retenue en position montée dans le logement 24 des composants du verrou 14 est assurée par le bouchon de retenue 16 qui comporte à cet effet une face transversale 46 tournée vers l'intérieur du logement qui prend appui contre l'épaulement radial 47 qui sépare le logement 24 du logement 28.

La face 46 du bouchon de retenue 16 comporte un évidement 48 qui délimite une lumière 50 pour le guidage en coulissement, selon une direction perpendiculaire à l'axe A1 du corps cylindrique 30 du bouchon 16 et qui est également l'axe commun aux logements 24 et 28 d'un organe 52 (voir figure 1) de commande des déplacements d'un pêne 54.

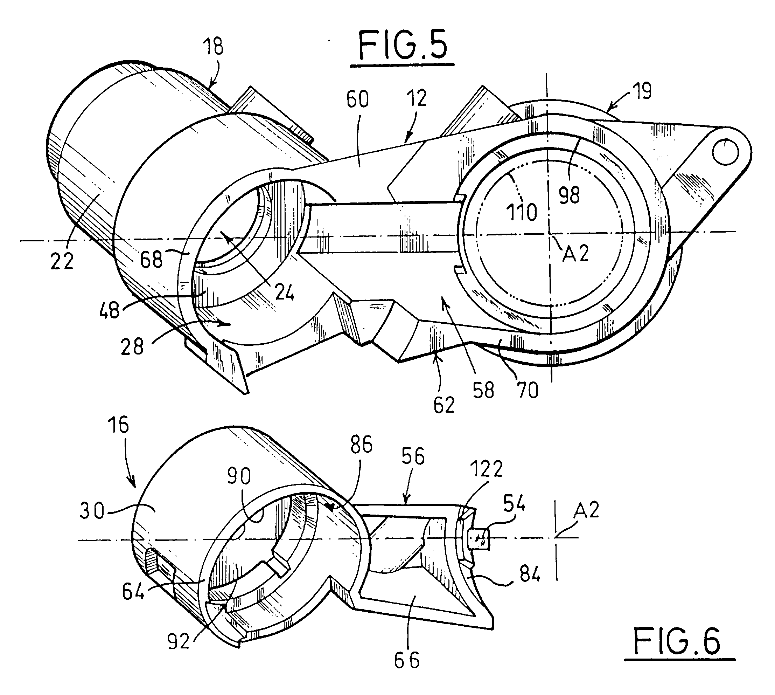

Comme on peut le voir, notamment aux figures 1, 2 et 6, la partie principale cylindrique 30 qui constitue le corps du bouchon de retenue 16 se prolonge transversalement par une patte massive 56 qui est réalisée venue de matière par moulage avec la partie 30.

La patte 56 présente une section transversale sensiblement rectangulaire et elle est prévue pour être reçue dans un évidement de profil complémentaire 58 qui est formé dans la face arrière 60 de la partie de liaison 62 du boîtier 12 qui relie la première partie de forme générale tubulaire 18 à la seconde partie 19.

Lorsque le bouchon de retenue 16 est en place dans le logement 28 avec sa patte de blocage 56 en place dans l'évidement 58, ses bords d'extrémité 64 et 66 sont en affleurement avec les bords périphériques correspondants 68 et 70 du boîtier 12 qui les entourent.

L'immobilisation en position montée du bouchon de retenue 16 dans le logement 28 et dans l'évidement 58 est assuré au moyen d'une goupille transversale d'immobilisation 72 qui est reçue dans un perçage débouchant 74 formé dans la partie de liaison 62 et dans un trou 75 formé dans la patte de blocage 56, la goupille étant introduite axialement depuis l'extérieur selon la flèche F3 de la figure 1.

La patte de blocage 56 comporte un trou traversant profilé 76 dans lequel est monté coulissant le pêne 54, l'extrémité 78 de ce dernier qui est prévue pour déboucher dans la lumière 50 comportant un crochet 80 qui est prévu pour coopérer avec une rainure 82 formée sur l'organe de commande 52 de manière à provoquer le retrait ou la saillie du pêne 54 par rapport à la surface d'extrémité 84 de la patte massive de blocage 56.

La face transversale d'extrémité arrière 64 de la partie cylindrique 30 du bouchon de retenue 16 comporte un réceptacle cylindrique 86 qui est prévu pour recevoir un contacteur électrique (non représenté) servant à commander le démarrage du moteur du véhicule équipé de l'antivol, sous l'action d'une tige de commande 88 qui traverse un trou 90 formé dans la paroi de fond 92 du bouchon 16 et qui est liée en rotation à un organe rotatif 94 de sortie du verrou 14 qui est entraîné en rotation par le barillet 44 et dont une came 96 commande les déplacements du coulisseau 52 de commande des déplacements du pêne 54.

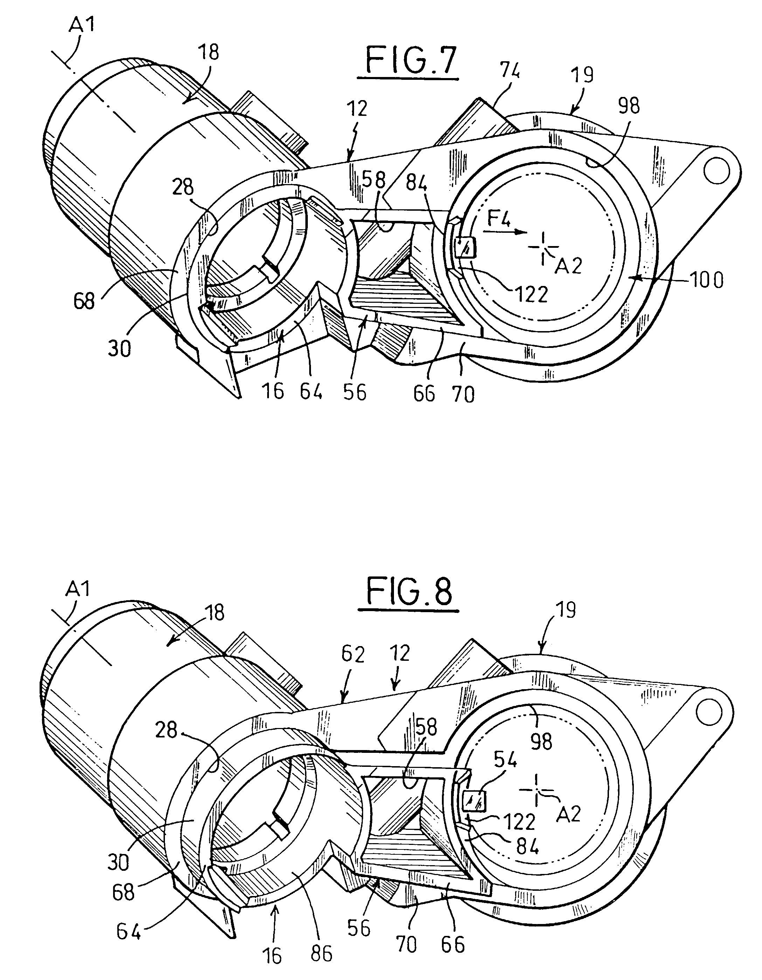

La goupille 72 a pour fonction d'immobiliser le bouchon de retenue 16 en position montée dans le logement et l'évidement 58, c'est-à-dire dans la position géométrique précise illustrée sur la figure 7.

Toutefois, et conformément aux enseignements de l'invention, l'extraction éventuelle par un voleur de la goupille 72 ne lui permettrait pas de désolidariser le bouchon de retenue 16 ni donc d'extraire par effraction le verrou 14 hors du logement 24.

En effet, la surface d'extrémité 84 de la patte de blocage 56 est une portion de surface cylindrique concave qui, en position montée et comme cela est illustré notamment sur la figure 7, complète la paroi cylindrique concave 98 d'un alésage 100 qui s'étend axialement, selon un axe A2 dans la seconde partie de forme générale cylindrique tubulaire 19 du boîtier 12.

L'alésage 100 est ouvert dans la face arrière d'extrémité 60 du boîtier 12 et il se termine à son autre extrémité par une portion de diamètre réduit 102 reliée à la paroi cylindrique concave principale 98 par une portion tronconique 104.

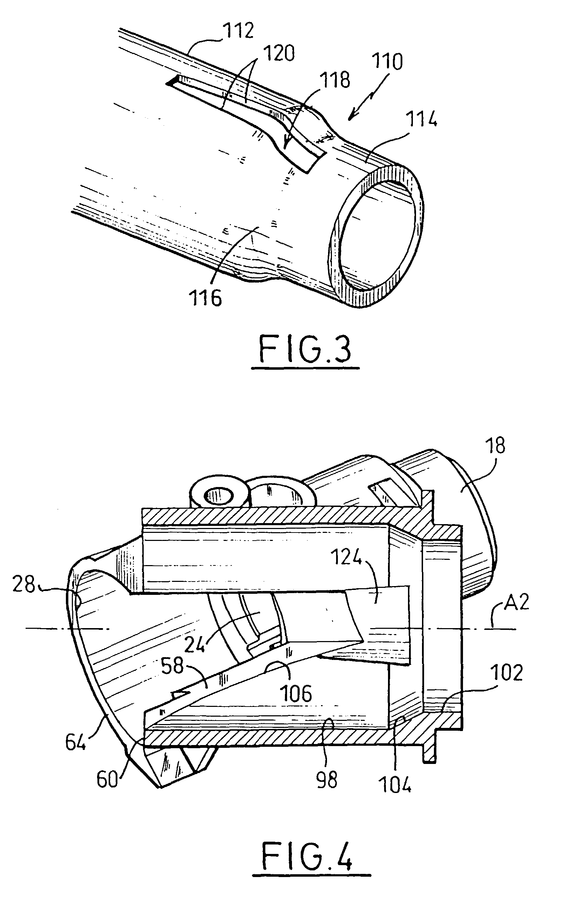

Comme on peut le voir sur la figure 4, le contour 106 de l'intersection entre l'évidement 58 et la paroi cylindrique concave 98 de l'alésage 100 est complémentaire du contour 108 de la surface cylindrique concave de la face d'extrémité 84 de la patte de blocage 56 du bouchon de retenue 16 de manière que, en position montée et comme cela est illustré sur la figure 7, l'alésage 100 présente une paroi cylindrique interne concave complète et continue.

Comme cela est illustré sur les figures, les axes A1 et A2 ne sont pas parallèles entre eux.

Ainsi, si l'on extrait partiellement le corps cylindrique 30 du bouchon de retenue 16 hors du logement 28 pour l'écarter de sa position d'assemblage illustrée sur la figure 7 dans laquelle il est normalement immobilisé par la goupille 72, on provoque simultanément un déplacement relatif de la surface cylindrique concave d'extrémité 84 de la patte de blocage 56 vers l'intérieur par rapport à la paroi cylindrique concave 98 de l'alésage 100 de la partie 19 du boîtier 12.

Un tel déplacement relatif n'est donc possible que si l'alésage 100 est parfaitement dégagé.

Le démontage du bouchon 16 est donc par conséquent impossible lorsque le boîtier 12 avec tous ses composants et avec le bouchon de retenue 16 assemblé en position par la goupille 72 est monté sur un tube de colonne de direction 110 dont le profil et les dimensions extérieures sont complémentaires de celles de l'alésage 100 et des portions de diamètres réduits 102 et 104 de celui-ci.

En effet, et comme on le comprend plus aisément grâce à l'illustration en silhouette du tube 110 représenté sur les figures, lorsque le tube est en place, il est impossible d'extraire le bouchon 16 car la paroi cylindrique externe principale 112 du tube 110 coopère de manière intime avec la portion de surface cylindrique concave 84 de la patte de blocage 56 et empêche ainsi tout déplacement transversal de cette dernière vers l'intérieur en direction de l'axe A2 selon la flèche F4 de la figure 7.

Si l'on considère la figure 8, on constate qu'il y a en effet interférence entre la surface 84 et la silhouette du tube 110 lorsque l'on tente d'extraire le bouchon de retenue 16 sans avoir préalablement démonté le boîtier 12 du tube de la colonne de direction 110.

Comme on peut le voir sur la figure 3, la partie principale cylindrique 112 du tube 110 qui présente un diamètre sensiblement égal à celui de la partie principale de l'alésage 100 se prolonge par une partie de diamètre réduit 114 à laquelle elle est reliée par une partie tronconique 116, les dimensions des parties 114 et 116 étant légèrement inférieures à celles des parties 102 et 104.

Ainsi, le tube de colonne de direction 110 peut être amené en appui axial à l'intérieur de la partie d'extrémité de l'alésage 100 pour déterminer une position axiale d'emboîtement du boîtier 12 sur le tube 110.

L'immobilisation axiale et l'indexation en rotation du boîtier 12 sur le tube 110 est assurée grâce à une fente ou encoche longitudinale 118 qui est formée dans la paroi du tube 110 et qui s'étend à l'extrémité de la partie principale 112 et en partie dans la partie tronconique 116 et la partie d'extrémité avant 114.

Comme on peut le voir sur la figure 3, les bords longitudinaux opposés 120 de l'encoche 118 ne sont pas parallèles mais forment entre eux un V qui s'ouvre en direction de la partie d'extrémité 114.

L'encoche 118 est prévue pour recevoir un cran d'indexation et d'immobilisation dont une première partie 122 est réalisée en relief sur la portion de surface cylindrique concave 84 de la patte de blocage 56 et dont l'autre partie terminale 124 est formée, comme on peut le voir sur la figure 4, dans la paroi cylindrique interne concave de l'alésage 100 dans le prolongement de la découpe 106 qui reçoit la surface d'extrémité 84 de la patte de blocage 56.

Le cran 122 présente également une légère pente inclinée par rapport à l'axe A2 de manière qu'il vienne s'emboîter légèrement à force dans l'encoche 118 lorsque le boîtier 12 est mis en place sur le tube 110 par introduction axiale de ce dernier dans la partie de forme générale tubulaire 19 du boîtier 12.

Comme on peut le voir sur la figure 1, le canal 76 dans lequel coulisse le pêne 54 débouche dans le cran en relief 122 et le pêne 54 peut ainsi déboucher à l'intérieur du tube 110 de la colonne de direction en passant à travers l'encoche 118 pour venir coopérer avec un organe rotatif (non illustré), de la colonne de direction qu'il bloque en rotation lorsque l'antivol est actionné.

L'assemblage des composants de l'antivol et le montage de ce dernier sur la colonne de direction s'effectuent de la manière suivante.

L'ensemble des composants du verrou 14 est assemblé et l'ensemble du verrou est introduit dans le logement 24.

Le bouchon de fermeture 16 préalablement équipé du coulisseau 52 et du pêne 54 est ensuite mis en place dans le logement 28 jusqu'à sa position d'immobilisation illustrée sur la figure 7.

Dans cette position, l'opérateur introduit la goupille d'immobilisation 72 selon la flèche F3 et maintient ainsi le bouchon de retenue 16 en place dans le logement 28 et l'évidement 58.

L'ensemble de l'antivol ainsi pré-assemblé avec le boîtier 12, le verrou 14 et le bouchon 16 peut ensuite être mis en place sur le tube 110 de la colonne de direction par introduction axiale de cette dernière jusqu'à la venue en prise du cran 122 dans l'encoche 118 du tube.

Une fois cette opération terminée, seule la face d'extrémité avant 32 de la partie 18 est accessible au conducteur pour commander l'antivol et le contacteur au moyen d'une clef introduite dans la fente 42 et le bouchon de retenue 16 ne peut plus être démonté ni arraché du logement 28, 58, même en cas d'extraction de la goupille d'immobilisation 72.

Outre sa très grande sécurité qui évite tout risque d'effraction par extraction du verrou, la conception de l'antivol 10 selon l'invention lui confère une grande compacité et une grande facilité de montage sur la colonne de direction.

Le boîtier 12 peut être réalisé en alliage léger tout en présentant une grande rigidité grâce aux nombreuses nervures de renfort qui relient entre elles les deux parties tubulaires 18 et 19 et qui s'étendent de part et d'autre de la partie intermédiaire de liaison 62.

On notera également que l'encombrement de l'antivol 10 est particulièrement réduit dans la mesure où il est essentiellement constitué d'une partie tubulaire 19 qui épouse la forme du tube 110 de la colonne de direction et par une autre partie de boîtier 18 dont les dimensions sont réduites et sont juste nécessaires pour loger le verrou 14 et le bouchon de retenue 16.

Le boîtier 12 est également conçu de manière à pouvoir être réalisé par moulage en une seule pièce, les logements 24 et 28 et l'alésage 100 débouchant dans une même face du boîtier permettant ainsi son démoulage de manière aisée.

## Revendications

1. Antivol (10) de direction de véhicule automobile du type comportant un boîtier (12) monté sur la colonne de direction (110) du véhicule et qui reçoit un verrou (14) qui commande un pêne (54) qui fait saillie à travers une ouverture (76) du boîtier pour coopérer avec un organe rotatif de la colonne de direction, du type dans lequel le boîtier (12) délimite un logement (24, 28) qui reçoit le corps du verrou (14) et qui est ouvert à l'une de ses extrémités axiales pour permettre au conducteur d'introduire une clef dans le verrou (38, 42) à travers un trou (36) formé dans un collet radial interne de retenue axiale (32) du verrou dans le logement, le collet radial interne de retenue (32) étant réalisé venu de matière avec une jupe annulaire (22) du boîtier (12, 18) qui délimite le logement du verrou, et le verrou étant mis en place dans le logement par une extrémité axiale ouverte (28) de ce dernier opposée au collet de retenue (32) en étant retenu axialement dans son logement (24) par un bouchon de retenue (16) qui obture ladite extrémité axiale ouverte (28) du logement (24) du verrou (14), et du type dans lequel, en position montée du boîtier (12) de l'antivol (10) sur la colonne de direction (110), un composant (110) de cette dernière empêche le retrait du bouchon de retenue (16), caractérisé en ce que le corps (30) du bouchon de retenue (16) est reçu axialement dans l'extrémité axiale ouverte (28) du logement (24) du verrou (14), en ce qu'il est prévu des moyens (72) d'immobilisation axiale du bouchon de retenue (16) dans l'extrémité ouverte (28) du logement (24) du verrou (14), en ce que le boîtier (12) comporte un alésage (98, 100) qui reçoit un tube (110), de section complémentaire, de la colonne de direction pour le montage de l'antivol (10) sur la colonne de direction, en ce que les axes (A2) de l'alésage (100) et (A1) du logement (24) du verrou (14) ne sont pas parallèles, et en ce que le corps (30) du bouchon (16) se prolonge transversalement par une patte de blocage (56) dont l'extrémité libre comporte une portion de surface cylindrique concave (84) qui, en position montée du bouchon de retenue (16), complète la surface cylindrique interne concave (98) de l'alésage (100) de manière à empêcher le démontage du bouchon (30) lorsque le tube (110) de la colonne de direction est monté dans l'alésage (100).

2. Antivol de direction selon la revendication 1, caractérisé en ce que les moyens d'immobilisation comportent une goupille (72).

3. Antivol de direction selon l'une des revendications 1 ou 2, caractérisé en ce que la patte de blocage (56) est reçue dans un évidement (58) du corps du boîtier (12) formé dans une partie (62) de liaison du boîtier entre la jupe (22, 26) du logement (24, 28) du verrou (14) et la partie tubulaire (19) dans laquelle est formé l'alésage (100).

4. Antivol de direction selon l'une quelconque des revendications précédentes, caractérisé en ce que le pêne (54) de l'antivol est monté coulissant dans le bouchon de retenue (56, 76) et il est susceptible de faire saillie à travers une ouverture (76) formée dans ladite portion de surface cylindrique concave (84) de la patte de blocage (56).

5. Antivol de direction selon la revendication 4, caractérisé en ce que la face transversale (46) du bouchon de retenue (16, 30) tournée vers l'intérieur du logement (24, 28) du verrou (14) comporte une lumière (50) de guidage en coulissement d'un organe (52) de commande du déplacement du pêne (54) qui coopère avec un organe de sortie (94, 96) du verrou (14).

6. Antivol de direction selon l'une quelconque des revendications précédentes, caractérisé en ce que la face transversale (66) du bouchon de retenue (30) tournée vers l'extérieur du logement (24, 28) du verrou (14) délimite un réceptacle (86) pour un contacteur électrique de mise en marche du moteur du véhicule, et en ce que le corps (30, 92) du bouchon de retenue (16) comporte un trou central débouchant (90) pour le passage d'un organe de sortie (94, 88) du verrou (14) susceptible de coopérer avec le contacteur.

7. Antivol de direction selon l'une quelconque des revendications précédentes, caractérisé en ce que le tube (110) de la colonne de direction comporte une fente (118) d'indexation en position angulaire et axiale du boîtier (12) sur le tube (110) qui reçoit un cran d'indexation (122, 124) de profil complémentaire formé en saillie sur la paroi concave (98) de l'alésage (100).

8. Antivol de direction selon la revendication 7, caractérisé en ce que le cran d'indexation est formé au moins en partie (122) sur la portion de surface cylindrique concave (84) de la patte de blocage (56) du bouchon de retenue (16).

9. Antivol de direction selon l'une des revendications 7 ou 8, caractérisé en ce que le pêne (54) est susceptible de faire saillie à l'intérieur du tube (110) de la colonne de direction à travers la fente d'indexation (118).

10. Antivol de direction selon l'une quelconque des revendications précédentes, caractérisé en ce que le boîtier de l'antivol est moulé en une seule pièce.

## Patentansprüche

1. Lenkradschloß (10) eines Kraftfahrzeuges mit einem Gehäuse (12), das an der Lenksäule (110) des Fahrzeuges angeordnet ist und das einen Schließzylinder (14) aufnimmt, welcher einen Riegel (54) betätigt, der durch eine Öffnung (76) des Gehäuses verschiebbar ist, um mit einem drehbaren Teil der Lenksäule zusammenzuwirken, wobei das Gehäuse (12) eine Aufnahme (24,28) umfaßt, die den Hauptteil des Schließzylinders (14) aufnimmt und die an einem ihrer axialen Enden offen ist, um es dem Fahrer zu erlauben, einen Schlüssel über eine Öffnung (36) in den Schließzylinder (38,42) einzuführen, wobei die Öffnung (36) in einem innenliegenden radialen Kragen (32) angeordnet ist, der den Schließzylinder axial in der Aufnahme hält, wobei der innenliegende radiale Haltekragen (32) aus einem Stück mit einer ringförmigen Schürze (22) des Gehäuses (12,18) hergestellt ist, welche die Aufnahme des Schließzylinders begrenzt, und wobei der Schließzylinder durch ein offenes axiales Ende (28) der Aufnahme befestigbar ist, das dem Haltekragen (32) gegenüberliegt, wobei er axial in seiner Aufnahme (24) durch ein Abschlußteil (16) gehalten wird, der das genannte offene axiale Ende (28) der Aufnahme (24) des Schließzylinders (14) verschließt, und wobei in der montierten Stellung des Gehäuses (12) des Lenkradschlosses (10) an der Lenksäule (110) ein Bauteil des Letztgenannten das Zurückziehen des Abschlußteiles (16) verhindert, dadurch gekennzeichnet, daß der Rumpf (30) des Abschlußteiles (16) axial an dem offenen axialen Ende (28) der Aufnahme (24) des Schließzylinders (14) anordbar ist, daß Elemente (72) zur axialen Festsetzung des Abschlußteiles (16) im offenen Ende (28) der Aufnahme (24) des Schließzylinders (14) vorgesehen sind, daß das Gehäuse (12) zur Montage des Lenkradschlosses (10) an der Lenksäule eine Bohrung (98,100) mit entsprechendem Querschnitt aufweist, welche das Rohr (110) der Lenksäule aufnimmt, daß die Achsen (A2 und A1) der Bohrung (100) und der Aufnahme (24) des Schließzylinders (14) nicht parallel zueinander angeordnet sind, und daß der Rumpf (30) des Abschlußteiles (16) quer durch eine Sperrpratze (56) verlängert ist, deren freies Ende einen Teil (84) mit einer zylinderförmigen konkaven Oberfläche umfaßt, der in der montierten Stellung des Abschlußteiles (16) die innere zylinderförmige konkave Oberfläche (98) der Bohrung (100) so ergänzt, daß der Ausbau des Abschlußteiles verhindert wird, wenn das Rohr (110) der Lenksäule in der Bohrung (100) installiert ist.

2. Lenkradschloß nach Anspruch 1, dadurch gekennzeichnet, daß die Festsetzungselemente einen Stift (72) umfassen.

3. Lenkradschloß nach Anspruch 1 oder 2, dadurch gekennzeichnet, daß die Sperrpratze (56) in einer Aussparung (58) des Rumpfes des Gehäuses (12) angeordnet ist, die sich in einem Verbindungsteil (62) des Gehäuses befindet, welches zwischen der Schürze (22,26) der Aufnahme (24,28) des Schließzylinders (14) und dem rohrförmigen, die Bohrung (100) enthaltenden Teil (19) angeordnet ist.

4. Lenkradschloß nach einem der vorhergehenden Ansprüche, dadurch gekennzeichnet, daß der Riegel (54) des Lenkradschlosses gleitend in der Pratze (56,76) angeordnet ist und durch eine Öffnung (76) der zylinderförmigen konkaven Oberfläche (84) der Sperrpratze (56) herausragt.

5. Lenkradschloß nach Anspruch 4, dadurch gekennzeichnet, daß die Querseite (46) des Abschlußteiles (16,30), die dem Inneren der Aufnahme (24,28) zugewandt ist, ein Langloch (50) zur gleitenden Führung eines Betätigungsorgans (52) zur Verschiebung des Riegels (54) aufweist, wobei das Betätigungsorgan (52) mit einem Ausgangsorgan (94,96) des Schließzylinders (14) zusammenwirkt.

6. Lenkradschloß nach einem der vorstehenden Ansprüche, dadurch gekennzeichnet, daß die der Außenseite der Aufnahme (24,28) zugewandte Querseite (66) des Rumpfes (30) ein Gehäuse (86) für einen elektrischen Schalter zum Ingangsetzen des Motors des Fahrzeuges umfaßt, und daß der Rumpf (30,92) des Abschlußteiles (16) in der Mitte ein Loch (90) für den Durchgang eines Ausgangsorgans (94,88) des Schließzylinders (14), das mit dem Schalter zusammenwirken kann, aufweist.

7. Lenkradschloß nach einem der vorstehenden Ansprüche, dadurch gekennzeichnet, daß das Rohr (110) der Lenksäule einen Schlitz (118) zur Verrastung des Gehäuses (12) in winkliger und axialer Stellung auf dem Rohr (110) aufweist und daß das Gehäuse (12) eine als Vorsprung auf der konkaven Wand (98) der Bohrung (100) ausgebildete Raste (122,124) mit einem entsprechenden Profil umfaßt.

8. Lenkradschloß nach Anspruch 7, dadurch gekennzeichnet, daß die Raste (122) mindestens teilweise durch die zylinderförmige konkave Oberfläche (84) der Sperrpratze (56) des Abschlußteiles (16) gebildet wird.

9. Lenkradschloß nach Anspruch 7 oder 8, dadurch gekennzeichnet, daß der Riegel (54) über den Rastschlitz (118) in das Innere des Rohres (110) der Lenksäule einschiebbar ist.

10. Lenkradschloß nach einem der vorstehenden Ansprüche, dadurch gekennzeichnet, daß das Gehäuse des Lenkradschlosses aus einem einzigen Stück geformt ist.

## Claims

1. A motor vehicle steering lock (10), of the type comprising a casing (12) which is mounted on the steering column (110) of the vehicle, and which receives a lock (14) that controls a bolt (54), which projects through an aperture (76) in the casing so as to cooperate with a rotatable member of the steering column, being further of the type in which the casing (12) defines a housing (24, 28) which receives the body of the lock (14) and which is open at one of its axial ends so as to enable the driver to introduce a key into the lock (38, 42) through a hole (36) formed in an internal radial collar (32) for retaining the lock in the housing, the internal radial retaining collar (32) being formed integrally with an annular skirt (22) of the casing (12, 18) which defines the housing of the lock, and the lock being fitted into the housing through an open axial end (28) of the latter opposite to the retaining collar (32), being retained axially in its housing (24) by a retaining plug (16) which obturates the said open axial end (28) of the housing (24) of the lock (14), and of the type in which, in the condition in which the casing (12) of the steering lock (10) is assembled on the steering column (110), a component (110) of the latter prevents retraction of the retaining plug (16), characterised in that the body (30) of the retaining plug (16) is received axially in the open axial end (28) of the housing (24) of the lock (14), in that means (72) are provided for axial immobilisation of the retaining plug (16) in the open end (28) of the housing (24) of the lock (14), in that the casing (12) has a bore (98, 100) which receives a tube, of complementary cross section, of the steering column for mounting the lock (10) on the steering column, in that the axis (A2) of the bore (100) and the axis (Al) of the housing (24) of the lock (14) are not parallel, and in that the body (10) of the plug (16) is extended transversely by a stop lug (56), the free end of which includes a concave cylindrical surface portion (84) which, when the retaining plug (16) is in its assembled position, completes the concave internal cylindrical surface (98) of the bore (100), so as to prevent the plug (30) from being disassembled when the tube (110) of the steering column is mounted in the bore (100).

2. A steering lock according to Claim 1, characterised in that the axial retaining means comprise a dowel (72).

3. A steering lock according to Claim 1 or Claim 2, characterised in that the stop lug (56) is received in an opening (58) in the body of the casing (12), formed in a connecting portion (62) of the casing between the skirt (22, 26) of the housing (24, 28) of the lock (14) and the tubular portion (19) in which the bore (100) is formed.

4. A steering lock according to any one of the preceding Claims, characterised in that the bolt (54) of the steering lock is mounted for sliding movement in the retaining plug (56, 76), and it is arranged to project through an aperture (76) formed in the said concave cylindrical surface portion (84) of the stop lug (56).

5. A steering lock according to Claim 4, characterised in that the transverse face (46) of the retaining plug (16, 30) that faces towards the interior of the housing (24, 28) of the lock (14) includes a slot (50) for guiding in sliding movement a member (52) for controlling the displacement of the bolt (54), which member cooperates with an output member (94, 96) of the lock (14).

6. A steering lock according to any one of the preceding Claims, characterised in that the transverse face (66) of the retaining plug (30) that faces towards the outside of the housing (24, 28) of the lock (14) defines a receptacle (86) for an electrical contactor for starting the engine of the vehicle, and in that the body (30, 92) of the retaining plug (16) has a central through hole (90) for the passage through it of an output member (94, 88) of the lock (14) which is arranged to cooperate with the contactor.

7. A steering lock according to any one of the preceding Claims, characterised in that the tube (110) of the steering column has a slot (118) for indexing the casing (12) circumferentially and axially on the tube (110), which receives an indexing projection (122, 124) of complementary profile, formed in projecting relationship on the concave wall (98) of the bore (100).

8. A steering lock according to Claim 7, characterised in that at least a part (122) of the indexing projection is formed on the concave cylindrical surface portion (84) of the stop lug (56) of the retaining plug (16).

9. A steering lock according to Claim 7 or Claim 8, characterised in that the bolt (54) is arranged to project within the tube (110) of the steering column, through the indexing slot (118).

10. A steering lock according to any one of the preceding Claims, characterised in that the casing of the steering lock is moulded in one piece.
